# EUROPEAN PATENT APPLICATION

(11) **EP 3 002 644 A2**
(43) Date of publication of application: **06.04.2016**
(21) Application number: 15187186.0
(22) Date of filing: 28.09.2015
(51) Int. Cl.: G04G 21/00, G04B 37/14, G04C 3/00

(54) **WRISTWATCH STRUCTURE WITH PHYSICAL HANDS AND METHOD FOR OFFERING COMMUNICATION FUNCTION TO WRISTWATCH**

(30) Priority: 30.09.2014 TW 103134049
(71) Applicant: Princo Corp., Hsinchu 300 (TW)
(72) Inventor: Yang, Chih-kuang, 300 Hsinchu-City (TW); Chang, Cheng-yi, 300 Hsinchu-City (TW); Kuo, Chi-pin, 300 Hsinchu-City (TW)
(74) Representative: Isarpatent

(57) **Abstract**

The present invention provides a wristwatch structure with physical hands and a method for offering a communication function to a wristwatch, which uses remaining room in a traditional wristwatch (such as a mechanical watch and a quartz watch) to dispose an electronic module. By way of wireless transmission, the electronic module is utilized to receive wireless signals transmitted from a device (such as a smart phone) near a wristwatch user, and to provide a prompt message (such as vibration or an audio sound) based on the wireless signals. The present invention gives a new function to the traditional wristwatch, and is also capable of solving the problem of prompt function not working in large-scale cell phone.

## Description

### TECHNICAL FIELD OF THE INVENTION

The present invention relates to a wristwatch, and more particularly, to a wristwatch structure with physical hands and a method for offering communication function to a wristwatch.

### BACKGROUND OF THE INVENTION

With the mobile communication devices (such as, cellular phone, PDA, smart phone, pad phone and tablet) have been gradually popular. People can check time with these devices and not rely on the traditional wristwatches (such as quartz watch, mechanical watch, et cetera). The market of the traditional wristwatches is shrinking.

Meanwhile, with the raising of the wearable devices, the new type wristwatches slowly replace the traditional wristwatches. Such new type wristwatches generally utilize displays (such as liquid crystal displays, organic LED displays and curved displays) to show time information and possess many functions of linking the smart mobile devices. For instance, the new type wristwatches can prompt to the user when the smart mobile devices receive a new message or an arrival e-mail.

However, many users still own the traditional wristwatches. Some of them are still in use, other some may sit idle or rarely in use. The idle traditional wristwatches do result in resource waste. For instance, the traditional wristwatch can be memorial to some people but almost not practicable. Therefore, it is meant to sit idle. Besides, some people may particularly be in favor of the styles and designs of mechanical watches or high end quartz watches. Therefore, there is still a certain market for the traditional wristwatches.

If improvement can be implemented to the traditional wristwatches to give new functions to make them more practicable. People are willing to wear the traditional wristwatches which they own already. The resource waste can be prevented. It is possible to attract people to buy the traditional wristwatches and expand the business opportunity for the traditional wristwatches.

Furthermore, the present mobile communication devices have the following issues. For instance, the sizes of the smart phones get larger and larger for satisfying the large screen demands of the people, which makes it more and more difficult to directly put the smart phone in the pocket and instead has to put it in the backpack. When the distance between the user and the backpack is too far, the existing prompt function of the phone may become invalid. For example, the vibration of the phone as receiving an incoming call, a new message or an arrival e-mail cannot be noticed by the user. Accordingly, the vibration function is actually useless for a large-scale cell phone.

The inventors of the present invention feel that the resource waste issues due to the idle traditional wristwatches need to be solved and look forward improvements to the traditional wristwatches which can solve the existing issues of the mobile communication devices at the same time. Provides is a method for offering communication function to a wristwatch and a wristwatch structure with physical hands.

### SUMMARY OF THE INVENTION

An objective of the present invention is to provide a wristwatch structure with physical hands and a method for offering communication function to a wristwatch to give the traditional wristwatches new functions.

For achieving the aforesaid objective, the present invention provides a wristwatch structure with physical hands, comprising: at least one physical hand for indicating time relevant information for a wristwatch user; a watchcase forming an accommodating room; a watch movement disposed in the accommodating room formed by the watchcase for generating a signal to drive the at least one physical hand; and an electronic module that is independent of the watch movement and other time elements in structure, the electronic module being assembled into the accommodating room formed by the watchcase and being assembled into a remaining room beyond the space occupied by the watch movement and the other time elements; wherein the electronic module receives an external signal transmitted from outside of the wristwatch structure by a wireless communication, and provides a prompt message for the wristwatch user based on the external signal.

Furthermore, the present invention provides a method for offering communication function to a wristwatch, and the wristwatch at least comprises a watchcase, a watch movement and at least one physical hand, wherein the at least one physical hand is employed for indicating time relevant information for a wristwatch user, and the watchcase forms an accommodating room, and the watch movement is disposed in the accommodating room formed by the watchcase for generating a signal to drive the at least one physical hand, and the method comprises: providing an electronic module, and the electronic module comprises a monolithic module and a prompting device; wherein the monolithic module at least comprising a processor, a clock oscillator, at least one passive element and at least one kind of organic material, and the processor is employed for processing signals, and the processor, the clock oscillator and the at least one passive element are covered with the at least one kind of organic material to be the monolithic module; assembling the electronic module into the accommodating room formed by the watchcase, and assembling the electronic module into a remaining room beyond the space occupied by the watch movement and the other time elements; and employing the monolithic module to receive wireless signals transmitted from outside of the wristwatch and providing a prompt message to the wristwatch user according to the wireless signals.

Furthermore, the present invention provides a wristwatch structure with physical hands, comprising: at least one physical hand for indicating time relevant information for a wristwatch user; a watchcase forming an accommodating room; a watch movement disposed in the accommodating room formed by the watchcase for generating a signal to drive the at least one physical hand; and an electronic module that is independent of the watch movement and other time elements in structure, the electronic module being assembled into the accommodating room formed by the watchcase and being assembled into a remaining room beyond the space occupied by the watch movement and the other time elements; wherein the electronic module receives an external signal transmitted from outside of the wristwatch structure by a wireless communication, and operates based on the external signal.

The present invention utilizes remaining room in a traditional wristwatch (such as a mechanical watch and a quartz watch) to dispose an electronic module. By way of wireless transmission, the electronic module is utilized to receive wireless signals transmitted from a device (such as a smart phone) near a wristwatch user, and to provide a prompt message (such as vibration or an audio sound) based on the wireless signals. The present invention is capable of solving the resource waste issues due to the idle traditional wristwatches and effectively eliminating the issue that the large-scale cell phone has to put in the backpack so that prompt effect reduction and vibration condition failure occur due to the phone is far away from the user.

### BRIEF DESCRIPTION OF THE DRAWINGS

FIG. 1 shows a diagram of an appearance of a wristwatch with physical hands according to one embodiment of the present invention.
FIG. 2A shows an interior view diagram of the wristwatch with physical hands according to the first embodiment of the present invention.
FIG. 2B shows a diagram of that a prompting device of the present invention is a speaker.
FIG. 2C shows a top view diagram of an inner structure of a monolithic module achieved by the embodiment of the present invention.
FIG. 2D shows a sectional diagram of the monolithic module in FIG. 2C along the A-A' direction.
FIG. 2E shows an interior view diagram of the wristwatch having a monolithic module.
FIG. 3A shows an interior view diagram of a wristwatch with physical hands according to the second embodiment of the present invention.
FIG. 3B shows diagram of the wristwatch having network sharing function in the present invention.
FIG. 4A shows an interior view diagram of a wristwatch with physical hands according to the third embodiment of the present invention.
FIG. 4B shows diagram of the wristwatch having wireless charging function in the present invention.
FIG. 4C shows diagram of the wristwatch having wireless charging function and network sharing function in the present invention.
FIG. 5 shows a flowchart of a method for offering communication function to a wristwatch.

### DETAILED DESCRIPTION OF THE INVENTION

The present invention provides a wristwatch structure with physical hands and a method for offering communication function to a wristwatch. In the course of the present invention, the inventors of the present invention found that there is remaining room which is not used existing in the interior of the wristwatch after the most traditional wristwatches (such as mechanical watch and quartz watch) have assembled. The present invention utilizes the unused accommodating room surround by the watchcase to dispose an electronic module. The electronic module is independent of the existing watch movement and other time elements (i.e. the mechanical elements and electronic elements for indicating time relevant information).

Preferably, the aforesaid electronic module can receive signal transmitted from the peripheral device of the wristwatch user by a wireless communication and provides a prompt message for the wristwatch user based on the signal. For instance, the wristwatch of the present invention can provide the prompt message for the user when the user wears the wristwatch of the present invention and the smart phone of the user receives an incoming call, a new message, an arrival e-mail or other prompt message (such as meeting schedule reminder). For instance, the wristwatch generates vibration or an audio sound.

In the present invention, with the generated prompt message of the wristwatch wore by the user, the user can instantly aware them. Therefore, the present invention can effectively eliminate the issue that the large-scale cell phone has to put in the backpack so that prompt effect reduction and vibration condition failure occur due to the phone is far away from the user.

As aforementioned, there is still a lot of remaining room which is not used existing in the interior of the most traditional wristwatches, as mentioning the mechanical watches and the quartz watches (particularly as mentioning the quartz watches). Therefore, the wristwatch provided by the present invention comprises is a wristwatch with physical hands. It comprises physical hands (hour hand, minute hand and second hand) and different from the electric watch and new type wristwatch of fashion wearable device which utilizes a display (such as a liquid crystal display or an organic LED display) for indicating time.

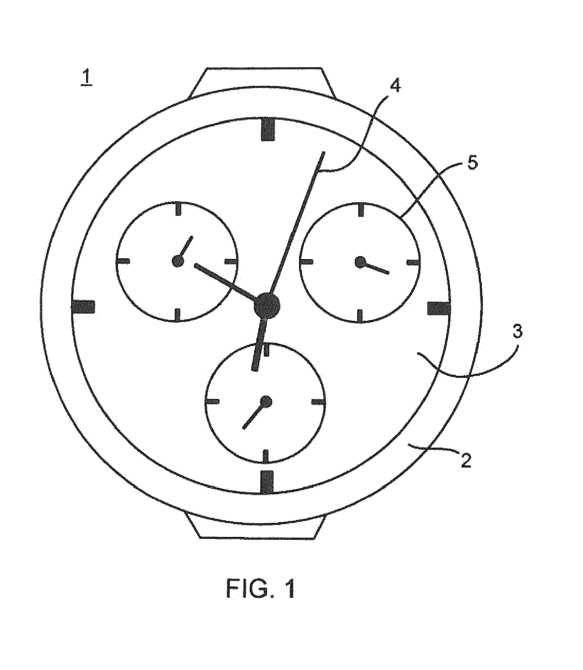

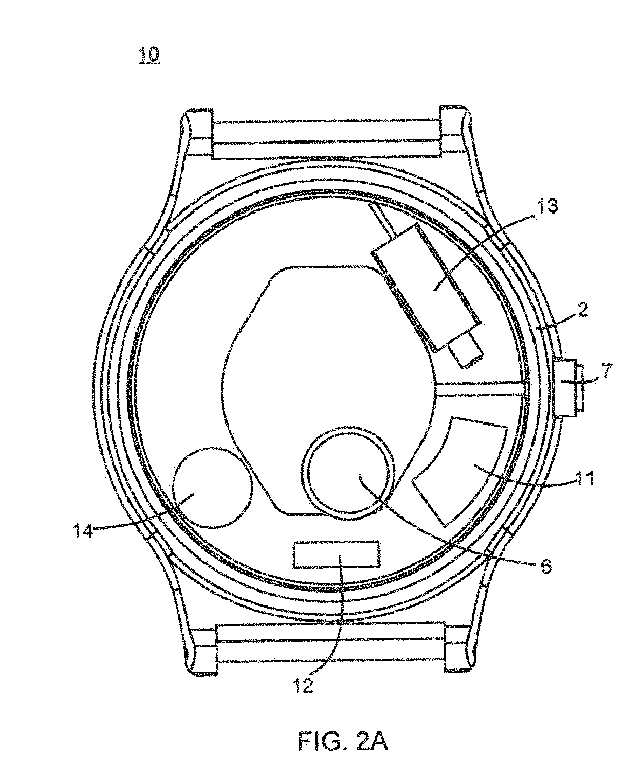

Please refer to FIG. 1, which shows a diagram of an appearance of a wristwatch 1 with physical hands according to one embodiment of the present invention. As seeing in the front view of the wristwatch 1 as shown in FIG. 1, the wristwatch 1 comprises a watchcase 2, a dial plate 3 a watch glass (not indicated), a main indicator 4 and a minor indicator 5 (optional). The watchcase 2 forms an accommodating room which can accommodate a watch movement 6, driver (such as an electric motor, not shown) and other time elements. The watch movement 6 is employed to generate signals for driving the indicators 4, 5. The driver is directly or indirectly coupled to the indicators 4, 5. The driver drives the indicators 4, 5 to proceed circular motion, rectilinear motion or other similar motions on the dial plate 3 according to the signals generated by the watch movement 6. Moreover, the wristwatch 1 can comprise a crown 7 (shown in FIG. 2A) for adjusting the positions of the main indicator 4 and the minor indicator 5.

As shown in FIG. 1, as being a possible embodiment, the main indicator 4 of the wristwatch 1 can comprise three hands. The minor indicator 5 can comprise functions of showing information of three different time zones. The main indicator 4 and the dial plate 3 coordinate for indicating time relevant information. For instance, main indicator 4 comprises a physical hour hand, a physical minute hand and a physical second hand for indicating the time information of hour, minute and second. The minor indicator 5 comprises functions of indicating the date information of year, month, date, waxes and wanes, and stopwatch.

Significantly, the indicator having several physical hands is employed for description of the aforesaid embodiment. It is understandable that it is not limitation to the present invention. As what can be understood from the following context, the present invention is applicable to the traditional wristwatches which have enough room inside. The number of the physical hands is not restricted hereby according to the present invention. As long as the wristwatch comprises at least one physical hand that can possess the traditional function of the wristwatch.

Please refer to FIG. 2A, which shows an interior view diagram of the wristwatch 10 with physical hands according to the first embodiment of the present invention. In this embodiment, an electronic module is added based on the traditional wristwatch. As shown in FIG. 2A, the electronic module comprises a wireless signal transceiver 11 (such as a bluetooth signal transceiver), an antenna 12 (such as a chip antenna shown in FIG. 2A) and a prompting device 13 (such as a vibrator). The electronic module is independent of the original structure of the traditional wristwatch in structure. For instance, it is independent of the watch movement 10 (the watch movement containing a battery inside) and other time elements (i.e. the mechanical elements and electronic elements for indicating time relevant information). That is to say, the electronic module is arranged to be independent of the original arrangement and functions of the traditional wristwatch in space and in function, i.e. independent of the watch movement 6 and other time elements. Besides, the electronic module can comprises a module battery 14 for supplying power, such as supplying power to the electronic elements inside the electronic module.

As aforementioned, there is still a lot of remaining room which is not used existing in the interior of the most traditional wristwatches. In this embodiment, the electronic module is assembled into the remaining room in the interior of the traditional wristwatch. As shown in FIG. 2A, beyond the space occupied by the watch movement 6 and the other time elements (such as driver and gears), a lot of remaining room still exist. In this embodiment, the wireless signal transceiver 11, the antenna 12 and the prompting device 13 of the electronic module are assembled into the accommodating room formed by the watchcase, and particularly assembled into a remaining room beyond the space occupied by the watch movement 6 and the other time elements.

It is understandable that as long as the traditional wristwatch has enough room inside, the electronic module of this embodiment can be assembled thereinto. The traditional wristwatch has many types and interior arrangements are various. The persons skilled in this art can adjust the positions of the respective elements of the electronic module according to the remaining room arrangement inside the traditional wristwatch. There are not specific restrictions to the respective elements (i.e. the wireless signal transceiver 11, the antenna 12, the prompting device 13 and the module battery 14) in this embodiment.

In this embodiment, the wireless signal transceiver 11 receives an external signal transmitted from outside of the wristwatch 10 via the antenna 12 and transmits the signal to the prompting device 13. The prompting device 13 provides a prompt message for the wristwatch user based on the external signal. For instance, the wireless signal transceiver 11 can be a bluetooth signal transceiver. As an illustration, after the match of the smart phone of the user and the bluetooth signal transceiver 11 is accomplished, the prompt message can be transmitted to the bluetooth signal transceiver 11 of the wristwatch 10 when the smart phone receives an incoming call, a new message, an arrival e-mail or other prompt message (such as meeting schedule reminder). The prompting device 13 of the wristwatch 10 provides the prompt message for the wristwatch user based on the signal received by the bluetooth signal transceiver 11.

In one embodiment, the prompt message generated by the prompting device 13 of the wristwatch 10 is the same as the original prompt message of the smart phone. For instance, the audio sound prompt message generated by the prompting device 13 of the wristwatch 10 is the same as the original one of the smart phone. That is to say, the smart phone merely instructs the prompting device 13 of the wristwatch 10 to play the same audio sound. In other embodiments, the smart phone transmits the message type (such as an incoming call, a new message and an arrival e-mail) to the wristwatch 10. The electronic module of the wristwatch 10 can read the message type of the prompt message and the prompting device 13 of the wristwatch 10 generates the prompt message according the interior prompt settings.

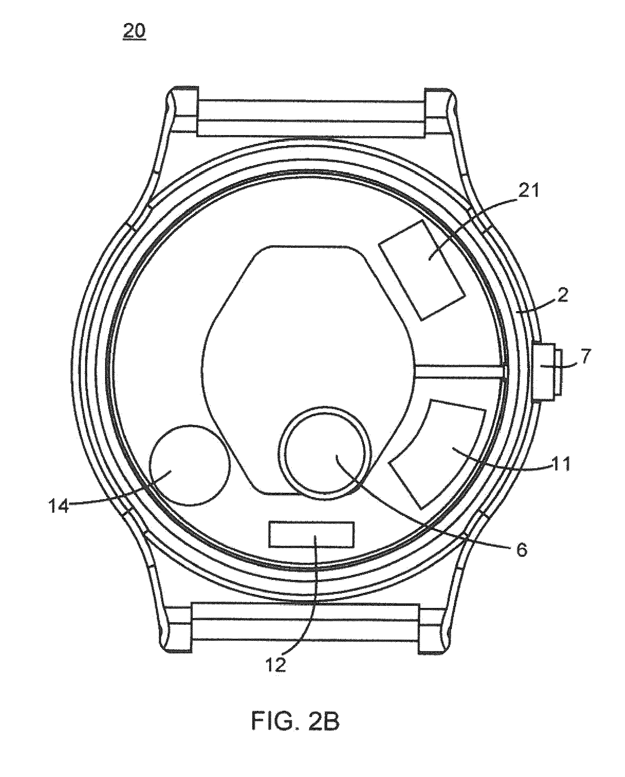

In this embodiment, the prompting device 13 can be a vibrator preferably. As shown in FIG. 2A, it can generates vibration according to the wireless signals received by the wireless signal transceiver 11 and provides the vibration to the wristwatch user. Because the user directly wears the wristwatch on the wrist, the vibration generated by the vibrator 13 of the wristwatch 10 can be directly aware by the wristwatch user without missing any prompting messages. Alternately, the prompting device 13 can be a speaker 21 as shown in FIG. 2B. The speaker 21 can generate an audio sound prompt message. The user wears the wristwatch 10 and the sound generated by the wristwatch 10 is relatively closer for the user. The audio sound prompt message generated by the wristwatch 10 can be easily aware by the user. Certainly, the prompting device 13 can comprises a vibrator and a speaker at the same time. The wristwatch 10 can generate the vibration and the audio sound together or generate one of the vibration and the audio sound. Besides, the aforesaid prompt message can comprise other possibilities. As an illustration, the wristwatch 10 can generate a light prompt message (a LED light) to prompt the user.

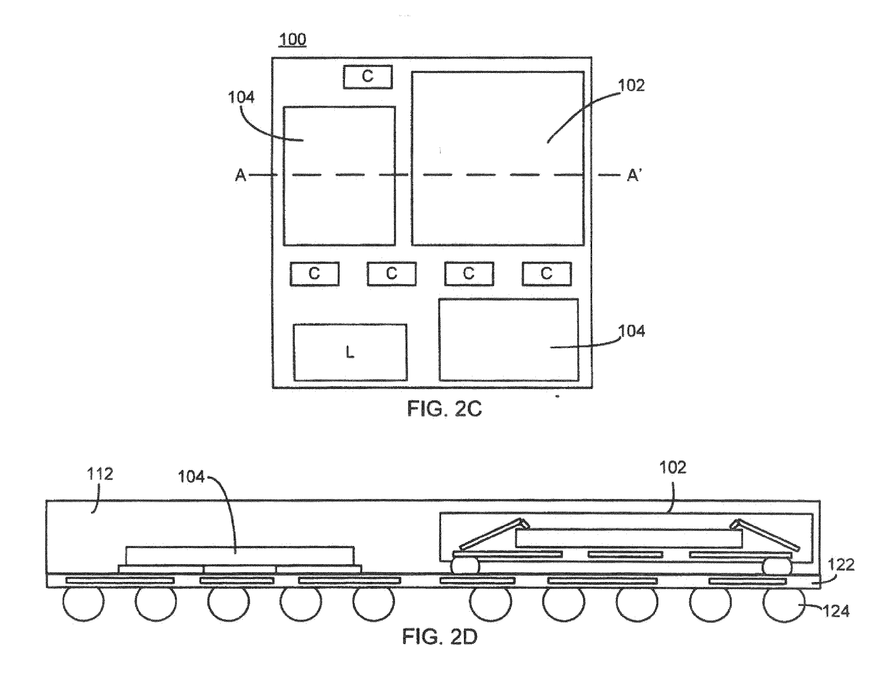

Please refer to FIG. 2C and FIG. 2D. FIG. 2C shows a top view diagram of an inner structure of a monolithic module achieved by the embodiment of the present invention. FIG. 2D shows a sectional diagram of the monolithic module in FIG. 2C along the A-A' direction. In this embodiment, the electronic module comprises a monolithic module 100, which at least comprises a processor 102, a clock oscillator 104, at least one passive element (such as a capacitor C and an inductor L) and at least one kind of organic material 112. The processor 102 is employed for processing signals. The processor 102, the clock oscillator 104 and the at least one passive element are covered with the at least one kind of organic material 112 to be the monolithic module 100. The geometric appearance of the monolithic module is determined according the remaining room beyond the space occupied by the watch movement 6 and the other time elements. The processor 102, the clock oscillator 104 and the at least one passive element are jointly coupled to an interposer 122 which is electrically connected to a printed circuit board (not shown) via solder balls 124.

Furthermore, respective elements in the electronic module can be packaged as monolithic modules. For example, the processor 102, the clock oscillator 104 and the passive element of foregoing wireless signal transceiver 11 and the antenna 12, the prompting device 13 can be assembled and packaged as one single monolithic module which is covered with organic material. With this monolithic module, the procedure of the assembling the electronic module into the traditional wristwatch can be simplified. Besides, such monolithic module can have the dimension as small as possible for adaptable to various types of the traditional wristwatches.

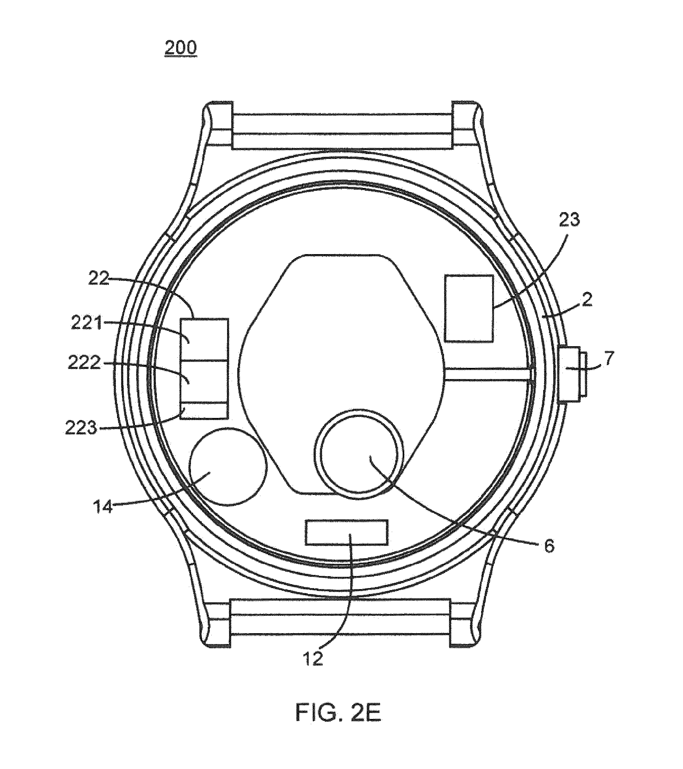

In one embodiment, as a wristwatch 200 shown in FIG. 2E, the electronic module can comprises a monolithic module 22 (such as, in accordance with the wireless signal transceiver 11). The monolithic module 22 at least comprises a processor 221, a clock oscillator 222, at least one passive element 223 and at least one kind of organic material. The processor 221 is employed for processing wireless signals. The clock oscillator 222 is employed for providing a required standard clock signal to the process 221. The processor 221, the clock oscillator 222 and the at least one passive element 223 are covered with the at least one kind of organic material to be the monolithic module 22. The monolithic module 22 is packaged by System in Package (SiP) which can effectively shrink the dimension of the module to allow the monolithic module 22 to be assembled into the wristwatch. Preferably, the geometric appearance of the monolithic module is determined according the remaining room beyond the space occupied by the watch movement 6 and the other time elements. Such monolithic module 22 having prompt function can be sold as a product. Moreover, a prompting device 23 or other electronic elements (such as a chip antenna) also can be integrated into the monolithic module 22 to make one single electronic module in the wrist watch which allows the procedure of the assembling the electronic module into the traditional wristwatch simpler.

This embodiment utilizes remaining room in a traditional wristwatch (such as a mechanical watch and a quartz watch) to dispose an electronic module. By way of wireless transmission, the electronic module is utilized to receive wireless signals transmitted from a device (such as a smart phone) near a wristwatch user, and to provide a prompt message (such as vibration or an audio sound) based on the wireless signals. The present invention is capable of solving the resource waste issues due to the idle traditional wristwatches and effectively eliminating the issue that the large-scale cell phone has to put in the backpack so that prompt effect reduction and vibration condition failure occur due to the phone is far away from the user.

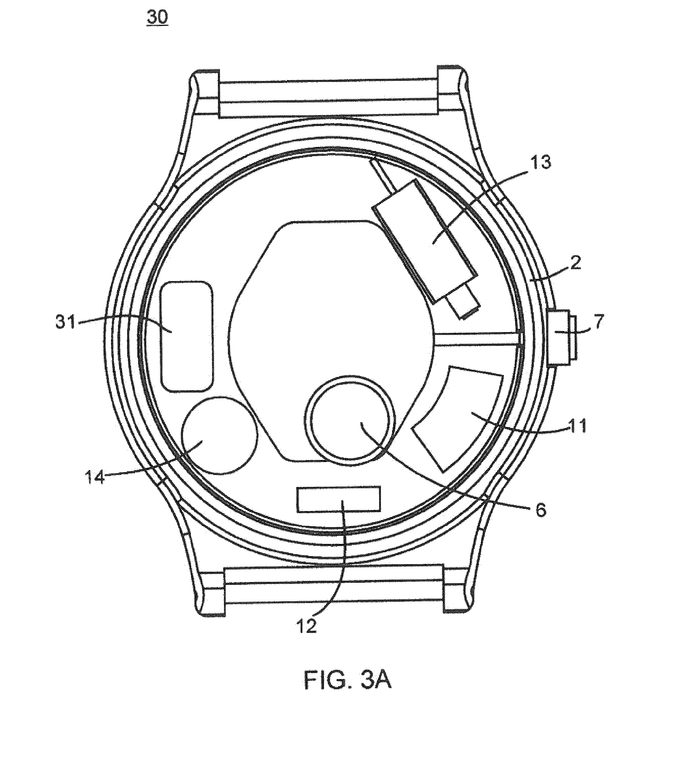

Please refer to FIG. 3A, which shows an interior view diagram of a wristwatch 30 with physical hands according to the second embodiment of the present invention. The difference of the wristwatch 30 with physical hands of the second embodiment from the first embodiment is that a wireless router 31 is added into the remaining room inside the wristwatch. The wristwatch 30 can receive wireless network signals transmitted from outside of the wristwatch 30 to generate Wireless Fidelity (Wi-Fi) signals for a device (such as a smart phone and a tablet) nearby the wristwatch user to use internet. The wireless router 31 can be packaged by System in Package (SiP) which can effectively shrink the dimension of the module to allow the monolithic module to be assembled into the wristwatch. Preferably, the geometric appearance of the monolithic module is determined according the remaining room beyond the space occupied by the watch movement and the other time elements.

The wireless router 31 also can be integrated into the module of the wireless signal transceiver 11 as being one monolithic module by System in Package. The geometric appearance of the monolithic module is determined according the remaining room beyond the space occupied by the watch movement and the other time elements.

The second embodiment of the present invention combines the prompt function and the network sharing function. The wireless router 31 possesses capability of converting the 3G communication signals into Wi-Fi signals. The peripheral device of the wristwatch user can use the Wi-Fi signals to get on the internet which is applicable to the peripheral device of the wristwatch user merely has Wi-Fi transceiver. Alternately, the wireless router 31 can be a repeater of the Wi-Fi signals for enhancing the Wi-Fi signals, which is significantly useful when the original Wi-Fi signal source is far away from the wristwatch user or the Wi-Fi signals is blocked by obstacles. The other application is that the wireless router rent for the user when they travel to the foreign is generally to be connected by few devices. With the wristwatch 30 according to the second embodiment of the present invention, the possible amount of the devices for accessing the sharing network can be expanded. It will be very convenient when lots of people travel together.

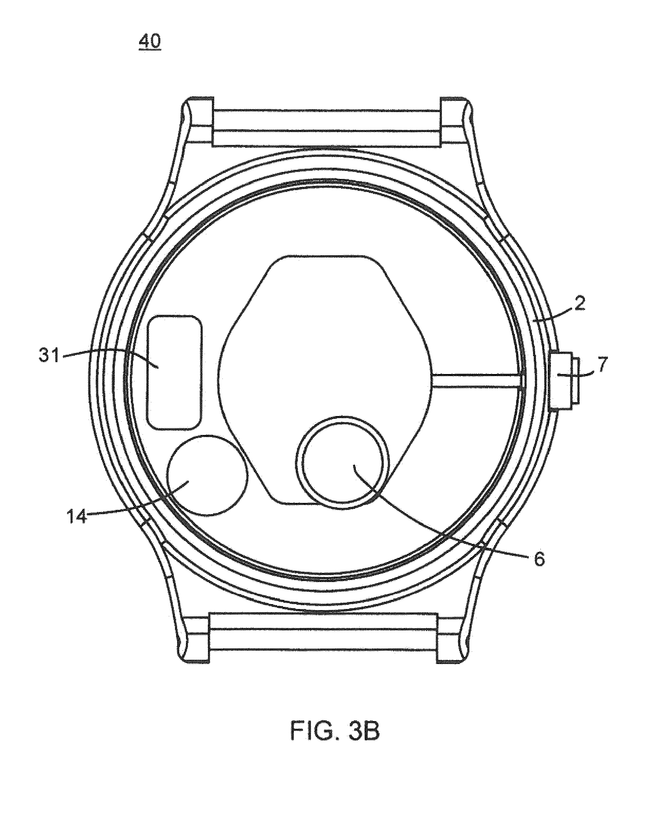

As considering another embodiment, merely the wireless router 31 is assembled into the wristwatch for certain but the wireless signal transceiver 11, the antenna 12 and the prompting device 13 are not assembled therewith as a wristwatch 40 shown in FIG. 3B. In the embodiment shown in FIG. 3B, merely the network sharing function but no prompt function is added. Nevertheless, such solution similarly gives the traditional wristwatch one additional practicable function and still solves the resource waste issues due to the idle traditional wristwatches.

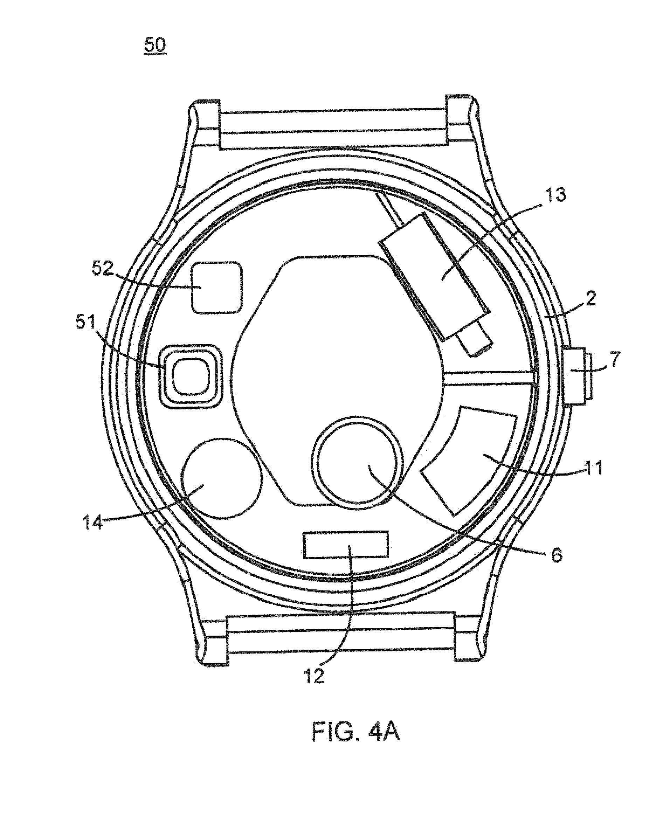

Please refer to FIG. 4A, which shows an interior view diagram of a wristwatch 50 with physical hands according to the third embodiment of the present invention. The difference of the wristwatch 50 with physical hands of the third embodiment from the first embodiment is that at least one wireless charging coil 51 and a charging management unit 52 are added into the remaining room inside the wristwatch. The wireless charging coil 51 is employed to generate electromagnetic induction according to wireless charging signals transmitted from outside of the wristwatch structure to produce a charging current accordingly. The charging management unit 52 is electrically coupled to the wireless charging coil 51 to manage the charging current produced by the wireless charging coil 51. The charging management unit 52 can be independently packaged by System in Package (SiP) to form one single monolithic module which can effectively shrink the dimension of the module to allow the monolithic module to be assembled into the wristwatch. Preferably, the geometric appearance of the monolithic module is determined according the remaining room beyond the space occupied by the watch movement 6 and the other time elements.

The charging management unit 52 also can be integrated into the module of the wireless signal transceiver 11 as being one monolithic module by System in Package. The geometric appearance of the monolithic module is determined according the remaining room beyond the space occupied by the watch movement and the other time elements.

The third embodiment of the present invention combines the prompt function and the wireless charging function. The current generated by the wireless charging coil 51 can be provided to the module battery 14. Namely, the charging management unit 52 can charge the module battery 14. The third embodiment of the present invention charges the electronic module by a wireless charging way. Therefore, the watchcase 2 does not need to be destroyed for additionally setting a charge port (such as a micro USB connecting port) to prevent the complex assembling procedure and to promote the modification intention of the wristwatch user for the assembly.

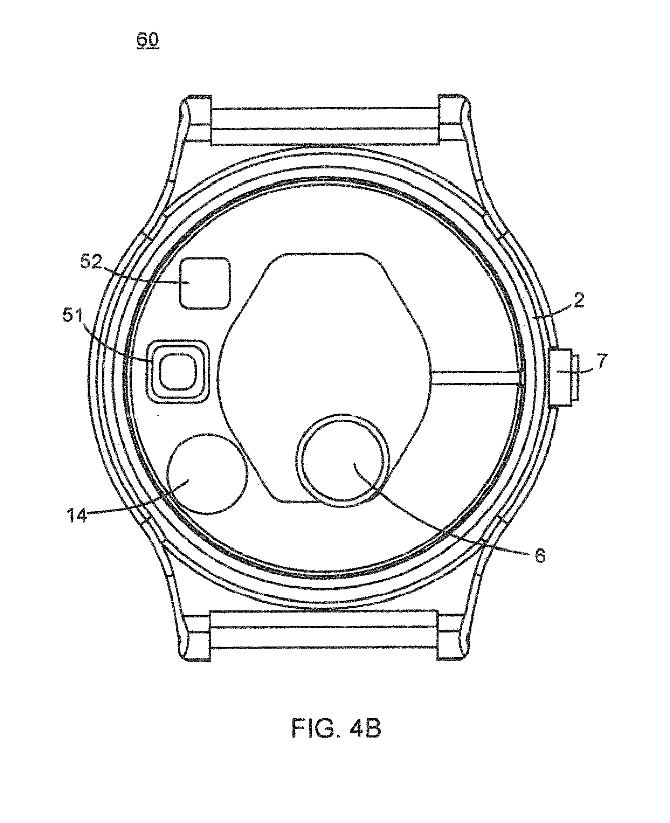

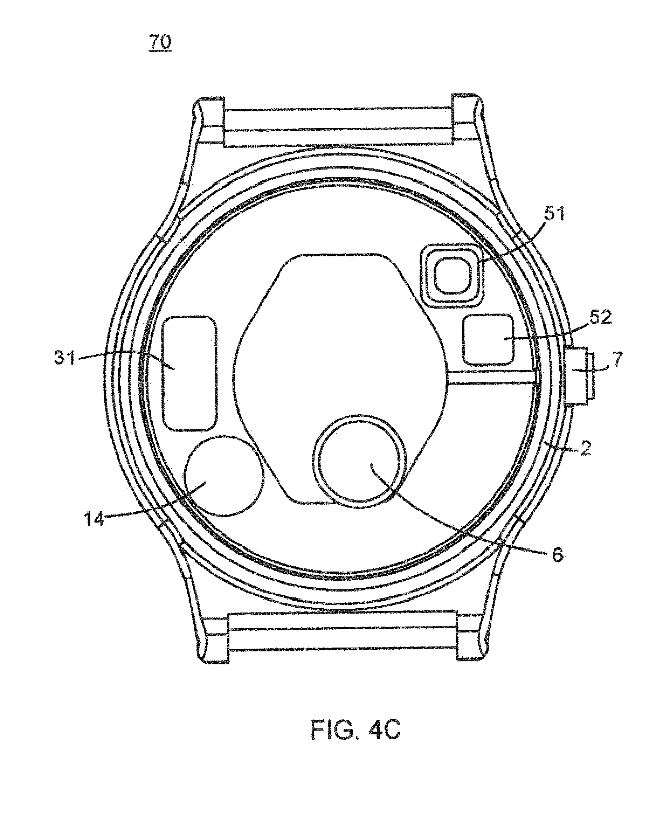

As considering another embodiment, merely the wireless charging coil 51 and the charging management unit 52 assembled into the wristwatch for certain but the wireless signal transceiver 11 , the antenna 12 and the prompting device 13 are not assembled therewith as a wristwatch 60 shown in FIG. 4B. The charging management unit 52 can be employed for charging the watch movement 6 of the wristwatch. Or, merely the wireless charging coil 51 and the charging management unit 52 for wireless charging function and the wireless router 31 for network sharing function are added as the wristwatch 70 shown in FIG. 4C. In the embodiments shown in FIG. 4B and FIG. 4C, the wristwatch 60 and the wristwatch 70 do not offer prompt function. Nevertheless, such solutions similarly give the traditional wristwatch additional practicable functions and still solve the resource waste issues due to the idle traditional wristwatches. The wireless router 31 and the charging management unit 52 can be independently packaged by System in Package (SiP) to form one single monolithic module which can effectively shrink the dimension of the module to allow the monolithic module to be assembled into the wristwatch. Preferably, the geometric appearance of the monolithic module is determined according the remaining room beyond the space occupied by the watch movement and the other time elements.

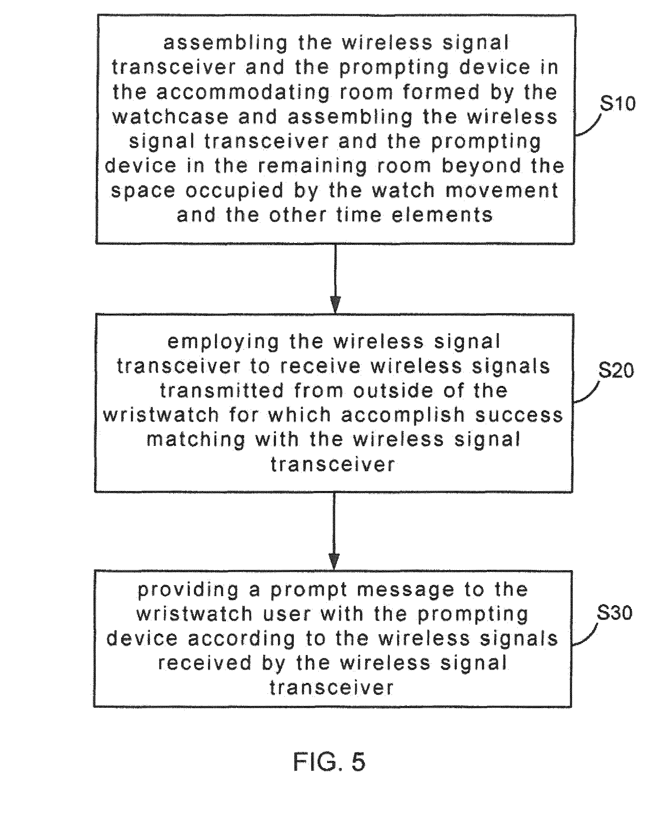

Please refer to the foregoing description related to the wristwatch structure with physical hands with the flowchart shown in FIG. 5. FIG. 5 shows a flowchart of a method for offering communication function to a wristwatch. The method for offering communication function to the wristwatch according to the present invention comprises steps of:

Step S10: assembling the wireless signal transceiver 11 and the prompting device 13 in the accommodating room formed by the watchcase 2 and assembling the wireless signal transceiver 11 and the prompting device 13 in the remaining room beyond the space occupied by the watch movement 6 and the other time elements. In this step, as aforementioned, the wireless signal transceiver 11 and the prompting device 13 are arranged to be independent of the original structure of the traditional wristwatch, i.e. independent of the watch movement 6 and other time elements (the mechanical elements and electronic elements for indicating time relevant information). The wireless signal transceiver 11 can be a bluetooth signal transceiver, which can transceive the bluetooth signals after the match with the mobile communication device is accomplished. The prompting device 13 can be a vibrator, a speaker, a combination of the two or an OLED. Furthermore, as aforementioned, the prompting device can be arranged in the monolithic module 22. In this step, the geometric appearance of the monolithic module is determined according the remaining room beyond the space occupied by the watch movement 6 and the other time elements. The monolithic module 22 can be assembled into the traditional wristwatch by a third part (such as a watch shop).

Step S20: employing the wireless signal transceiver 11 to receive wireless signals transmitted from outside of the wristwatch which accomplish success matching with the wireless signal transceiver 11. In this step, as an illustration, the bluetooth signal transceiver can be employed to transceive the bluetooth signals transmitted from the smart phone which has already accomplish the match with the bluetooth signal transceiver.

Step S30, providing a prompt message to the wristwatch user with the prompting device 13 according to the wireless signals received by the wireless signal transceiver 11. In this step, as an illustration, the vibrator can prompt the vibration to the wristwatch user that his smart phone receives a push message. The speaker can be prompt the audio sound prompt message. Or, the OLED can flash to remind the wristwatch user.

Several specific embodiments of the method for offering communication function to the wristwatch can be illustrated below.

A. The wristwatch maker purchases the watch movement from the watch movement factory, produces and assembles the traditional wristwatch. Through the retailer (the watch shop or the network shop, so called the third part), the traditional wristwatch is sold to the end consumer. Once the end consumer wants to add the electronic module of the present invention after the end consumer purchased the traditional wristwatch. The assembly can be performed by the third part. That is to say, the previous step S10 of assembling the wireless signal transceiver 11 and the prompting device 13 in the remaining room can be performed by the watch shop (i.e. the third part of the wristwatch maker and the electronic module producer). According to this, the user can goes to the watch shop and adds new function module to his traditional wristwatch to update the traditional wristwatch and the resource waste is avoided.

B. The third part (such as the watch shop) can offer the services of addition or replacement for the electronic module of the present invention to the wristwatch user. As an illustration, the watch shop can add the function module if the wristwatch of the end consumer does not have. The watch shop can add new function module or replace the damaged function module for the wristwatch of the end consumer. Thereby, the watch shop can promote the business volume.

C. The module supplier offering the electronic module of the present invention can directly sell the function module to the third part (such as the watch shop and the network shop). Certainly, direct sell to the end consumer will be proper. The persons skilled in wristwatch disassembly can add or replace the function module for the end consumer.

D. The wristwatch maker can add the electronic module of the present invention at the same time while assembling the wristwatch. The assembled can be sold to the end consumer through the third part (such as the watch shop and the network shop). That is to say, the previous step S10 of assembling the wireless signal transceiver 11 and the prompting device 13 in the remaining room is performed by the wristwatch maker. Because such wristwatch possesses extendibility, the end consumer is more willing to purchase such kind of wristwatch. The wristwatch maker can purchase function module from the module supplier for assembling the wristwatch to add various modules for the wristwatch products to create the product variety.

The important characteristic of the present invention is to offer additional functions for the traditional wristwatch which previously does not have by adding one monolithic module into the traditional wristwatch. These elements of the additional functions are independently packaged by System in Package (SiP) to form one single monolithic module. More significantly, the geometric appearance of the monolithic module is determined according the remaining room beyond the space occupied by the watch movement and the other time elements, which can effectively shrink the dimension of the module. The aforesaid method allows offering kinds of complex additional functions to the traditional wristwatch with simple and easy assembly procedure. Any one or any unit who does not have to equip professional electronic assembly tools can offer the complex electronic functions for the traditional wristwatch. The new technology and the new business method created on the basis of the present invention makes the traditional wristwatches to be added with various kinds of electronic functions but still remains the elegant beauty and savour of the traditional wristwatches.

While the preferred embodiments of the present invention have been illustrated and described in detail, various modifications and alterations can be made by persons skilled in this art. The embodiment of the present invention is therefore described in an illustrative but not restrictive sense. It is intended that the present invention should not be limited to the particular forms as illustrated, and that all modifications and alterations which maintain the spirit and realm of the present invention are within the scope as defined in the appended claims.

## Claims

1. A wristwatch structure with physical hands, **characterized in** comprising:
at least one physical hand for indicating time relevant information for a wristwatch user;
a watchcase forming an accommodating room;
a watch movement disposed in the accommodating room formed by the watchcase for generating a signal to drive the at least one physical hand; and
an electronic module that is independent of the watch movement and other time elements in structure, the electronic module being assembled into the accommodating room formed by the watchcase and being assembled into a remaining room beyond the space occupied by the watch movement and the other time elements;
wherein the electronic module receives an external signal transmitted from outside of the wristwatch structure by a wireless communication, and provides a prompt message for the wristwatch user based on the external signal.

2. The wristwatch structure according to claim 1, **characterized in that** the electronic module comprises:
a wireless signal transceiver, receiving wireless signals from outside of the wristwatch structure; and
a vibrator, generating vibration according to the wireless signals received by the wireless signal transceiver to prompt the vibration to the wristwatch user.

3. The wristwatch structure according to claim 2, **characterized in that** the wireless signal transceiver comprises a bluetooth signal transceiver.

4. The wristwatch structure according to claim 2, **characterized in that** the wireless signal transceiver comprises:
a processor, controlling the wireless signal transceiver and processing the wireless signals from the outside; and
a clock oscillator, providing a standard clock signal to the process as being a timing signal required for the processor.

5. The wristwatch structure according to claim 1, **characterized in that** the prompt message provided to the wristwatch user comprises a voice message.

6. The wristwatch structure according to claim 1, **characterized in that** the electronic module comprises:
a wireless router, employed to receive wireless network signals transmitted from outside of the wristwatch structure to generate Wi-Fi signals for a device nearby the wristwatch user to use internet.

7. The wristwatch structure according to claim 1, **characterized in that** the electronic module comprises:
at least one wireless charging coil, generating electromagnetic induction according to wireless charging signals transmitted from outside of the wristwatch structure to produce a charging current accordingly; and
a charging management unit, electrically coupled to the at least one wireless charging coil to manage the charging current produced by the at least one wireless charging coil.

8. The wristwatch structure according to claim 1, **characterized in that** the electronic module comprises a monolithic module, at least comprising a processor, a clock oscillator, at least one passive element and at least one kind of organic material, and the processor is employed for processing signals, and the processor, the clock oscillator and the at least one passive element are covered with the at least one kind of organic material to be the monolithic module, wherein a geometric appearance of the monolithic module is determined according the remaining room beyond the space occupied by the watch movement and the other time elements.

9. The wristwatch structure according to claim 2, **characterized in that** the wireless signal transceiver is a monolithic module, at least comprising a processor, a clock oscillator, at least one passive element and at least one kind of organic material, and the processor is employed for processing signals, and the processor, the clock oscillator and the at least one passive element are covered with the at least one kind of organic material to be the monolithic module, wherein a geometric appearance of the monolithic module is determined according the remaining room beyond the space occupied by the watch movement and the other time elements.

10. A method for offering communication function to a wristwatch, and the wristwatch at least comprises a watchcase, a watch movement and at least one physical hand, wherein the at least one physical hand is employed for indicating time relevant information for a wristwatch user, and the watchcase forms an accommodating room, and the watch movement is disposed in the accommodating room formed by the watchcase for generating a signal to drive the at least one physical hand, and **characterized in that** the method comprises:
providing an electronic module, and the electronic module comprises a monolithic module and a prompting device; wherein the monolithic module at least comprising a processor, a clock oscillator, at least one passive element and at least one kind of organic material, and the processor is employed for processing signals, and the processor, the clock oscillator and the at least one passive element are covered with the at least one kind of organic material to be the monolithic module;
assembling the electronic module into the accommodating room formed by the watchcase, and assembling the electronic module into a remaining room beyond the space occupied by the watch movement and the other time elements; and
employing the monolithic module to receive wireless signals transmitted from outside of the wristwatch and providing a prompt message to the wristwatch user according to the wireless signals.

11. The method according to claim 10, **characterized in that** the step of assembling the electronic module into the remaining room comprises:
arranging the electronic module independent of the watch movement and other time elements in space and in function.

12. The method according to claim 10, **characterized in that** the wireless signal transceiver comprises a bluetooth signal transceiver.

13. The method according to claim 10, **characterized in that** the step of assembling the electronic module into the remaining room comprises:
determining a geometric appearance of the monolithic module according the remaining room beyond the space occupied by the watch movement and the other time elements.

14. The method according to claim 10, wherein the wristwatch is sold to an end consumer before the wristwatch is not assembled with the electronic module, and the step of assembling the electronic module into the remaining room is performed by a third part of a wristwatch maker and a electronic module producer.

15. The method according to claim 10, wherein the step of assembling the electronic module into the remaining room is performed by a wristwatch maker and the wristwatch is sold to an end consumer after the electronic module is assembled into the wristwatch.
